# EUROPEAN PATENT APPLICATION

(11) **EP 1 965 560 A1**
(43) Date of publication of application: **03.09.2008**
(21) Application number: 07465001.1
(22) Date of filing: 01.03.2007
(51) Int. Cl.: H04L 29/06

(54) **Method and system for managing secure access to network content**

(71) Applicant: ADVANCED DIGITAL BROADCAST S.A., 1218 Geneva (CH)
(72) Inventor: Milek, Wojciech, 40-282, Katowice (PL)
(74) Representative: Hudy, Ludwik

(57) **Abstract**

In a system for managing access to network content with a certificate authority (113) capable to issue authenticity certificates (102) associated with network sites to be accessed by a user, operating a computer system provided with an Internet browser software (104) stored in a computer system memory, the Internet browser software (104) contains a browser manager (105), a certificates database (107) for storing the authenticity certificates (102) associated with the network sites and an authenticity certificates comparator (111) for comparing a current authenticity certificate associated with a network site being accessed with a permanently stored authenticity certificate associated with the network site. The authenticity certificate comparator (111) of this system is capable for outputting a result of comparison of the current authenticity certificate and the permanently stored authenticity certificate, and the browser manager (105) is configured to allow the user to access the network site basing on the result of comparison.

## Description

The present invention relates to a method and a system for managing secure access to network or Internet content servers, providing certificates of authenticity. Different embodiments of the present invention, described in the following detailed specification, are aimed at Internet browsing software, and in particular, but not exclusively, at security of personal, confidential digital data, exchanged between user's Internet browser software and network or Internet servers, while using such Internet browsing software for encrypted data transmissions.

The internet is nowadays widely used for e-commerce, on-line payment services or other transactions requiring private data to be exchanged in a secure manner. Such data may include credit cards numbers, passwords, user names and similar confidential information, that may be a potential target of theft. This may often happen, since many inexperienced users of the Internet are not aware, that their lack of understanding of the Internet and the Internet browsing software may lead to such an abuse.

For example an electronic theft method, known as 'phishing', is frequently used to acquire personal information during electronic data transmissions. This is achieved by imitating, resembling a trustworthy person (for example in an e-mail communication) or business (for example by displaying a fake bank website) in an electronic communication.

Another technique called 'man-in-the-middle' is aimed at intercepting an encrypted connection. This method will insert an attacking computer into the network traffic between the victim computer system and the secure server, then proxy the traffic through the attacking host, leaving the data transmitted unencrypted to the attacker. In such cases an authenticity certificate is changed such that the encrypted data stream is authenticated (then encrypted) with the attacking computer's certificate between attacking computer and victim computer, and authenticated (then encrypted) with the server certificate between attacking computer and the secure server.

The damage caused to Internet users by the aforementioned electronic theft methods can range from loss of access to email account to substantial financial loss.

A common technique aimed at making a digital transmission, of private user data, more secure is called Secure Sockets Layer or 'SSL'. In short the SSL is used to cipher data and certify trust between a remote network server, such as an on-line payment server, and a local computer. The network server maintaining authority, shall typically obtain an SSL authenticity certificate from an SSL certificate authority. Such certificate authority issues an authenticity certificate to a party upon execution of an agreement between the party and the certificate authority. Such certificate is an electronic document that is bound to the party and is both unique and unmodifiable after its issuance by the certificate authority. The issued authenticity certificate associates a particular domain name (a network resource in general) with a particular party, thereby identifying party's or network server's identity.

There are many certification authorities, currently on the market, offering digital SSL certificates, each with various certificate products. Other certificates issued by these certification authorities, for matching with certificates downloaded upon establishing connections, are called root certificates. Such root certificates are stored locally on user's local computers.

When Internet browser software establishes a connection with a network server, a session is created and the network server sends the SSL certificate to the Internet browser software. Such certificate states, among other data, the issuing party's name, the receiving party's name, time of validity of the certificate, a unique thumbprint and encryption algorithms used. Basing on the authenticity certificate obtained and verified, an encrypted session may be established with the network server and used to safely carry out private transactions.

However, most Internet users are unaware that such authenticity certificates exist during a secure Internet connection sessions. Typically Internet browsing software present an indication of the fact, that a secure SSL session has been started. It also can be determined from a change of the transmission protocol from HTTP to HTTPS, which can be determined from a displayed Internet address.

HTTPS is not a different transmission protocol from HTTP, but is based on a combination of a normal HTTP interaction over an SSL or Transport Layer Security (TLS) transport mechanism.

Unfortunately, only experienced Internet users pay required attention to validity and correctness of authenticity certificates obtained by their Internet browsing software in order to secure private data transmissions. Usually the Internet users do not know how to evaluate the information contained in the authenticity certificate, because conventional technologies hide the certificate in the background and only use it to set up the secure session. Typical Internet browsers will only alert the user if the downloaded certificate is corrupt, revoked or its validity time has expired.

For experienced users it is a mandatory action to open the downloaded certificate and verify the authenticity of the other party and to check certificate's thumbprint (a unique identifier of the SSL authenticity certificate), which is typically published on the website to allow comparison with downloaded certificates. However such checks are time consuming and need to be done for every SSL connection, before entering any confidential data, to improve data security.

It is the object of the present invention to allow for more safe secure data transmission, without any further cumbersome and complicated activities required from Internet browser users.

Thus, the present invention provides a method for managing access to network content, the method comprising the steps of obtaining an authenticity certificate from the network server during negotiating a first connection with a network server, hosting the network content, temporarily storing the authenticity certificate in a computer system's memory and validating the authenticity certificate as well as permanently storing the authenticity certificate in a computer system's non-volatile memory, obtaining a current authenticity certificate from the network server hosting the network content during negotiating another connection with the network server, comparing the authenticity certificate permanently stored in the computer system's non-volatile memory with the current authenticity certificate, and outputting a result of the comparison.

Preferably, step of permanently storing of the authenticity certificate is conditional upon user's acceptance.

Unless the user has accepted the authenticity certificate, entering user data into data entry components on a network site, received as the network content, or sending user's data to the network site can be prohibited.

At user's option, the authenticity certificate, permanently stored in the memory, is replaced with the current authenticity certificate when the result of the comparison identifies a difference between the stored authenticity certificate and the current authenticity certificate.

The stored authenticity certificate or the current authenticity certificate can be associated with a network site's bookmark.

In one advantageous embodiment of the invention, when a browsing software displays a bookmark with the authenticity certificate associated with the network site, the bookmark's appearance depends on whether the authenticity certificate has been validated.

Preferably, a bookmark data comprises a link to selected network site and the authenticity certificate associated with the network site.

In further advantageous embodiment of the invention a bookmark data further comprises a link to a network site where the owner of the authenticity certificate provides information on how to identify the current authenticity certificate obtained from the network server hosting the network content.

Preferably, when the result of comparison identifies a difference between the permanently stored authenticity certificate and the current authenticity certificate, an access to the network site is prohibited until the user has identified the current authenticity certificate as trustworthy or/and entering user data into data entry components on a network site, received as the network content, is prohibited until the user has identified the current authenticity certificate as trustworthy or/and sending user's data to the network site is prohibited until the user has identified the current authenticity certificate as trustworthy.

The stored authenticity certificate and the current authenticity certificate can be SSL (Secure Sockets Layer) certificates.

In addition, the idea of the invention is a computer program comprising program code means for performing all the steps of above describe method when the computer program is run on a computer as well as a computer readable medium having computer-executable instructions performing all the steps of this method.

The idea of the invention is also a system for managing access to network content with a certificate authority capable to issue authenticity certificates associated with network sites to be accessed by a user, operating a computer system provided with an Internet browser software stored in a computer system memory characterized in that the Internet browser software contains a browser manager, a certificates database for storing the authenticity certificates associated with the network sites and an authenticity certificates comparator for comparing a current authenticity certificate associated with a network site being accessed with a permanently stored authenticity certificate associated with the network site being accessed, and that the authenticity certificate comparator is capable for outputting a result of comparison of the current authenticity certificate and the permanently stored authenticity certificate, and that the browser manager is configured to allow the user to access the network site basing on the result of comparison.

The invention will now be described by way of an example and with reference to the accompanying drawings in which:
Fig. 1 presents a block diagram of Internet browser software presented as functional components;
Fig. 2 shows a flow chart of a method in accordance with which the present invention may operate;
Fig. 3 presents an exemplary GUI message displayed upon reception of an authenticity certificate;
Fig. 4 shows an exemplary GUI message displayed upon reception of an authenticity certificate that has changed; and
Fig. 5 shows an Internet browser software screen, listing bookmarks with associated, locally stored authenticity certificates.

The following description is directed at a system and a method for managing authenticity certificates, monitoring Internet addresses entered and reporting any changes between newly obtained and previously stored authenticity certificates. Generally stated, improvements to Internet browsing software are presented herein. Specific implementations of this general concept will be described in the following detailed embodiments.

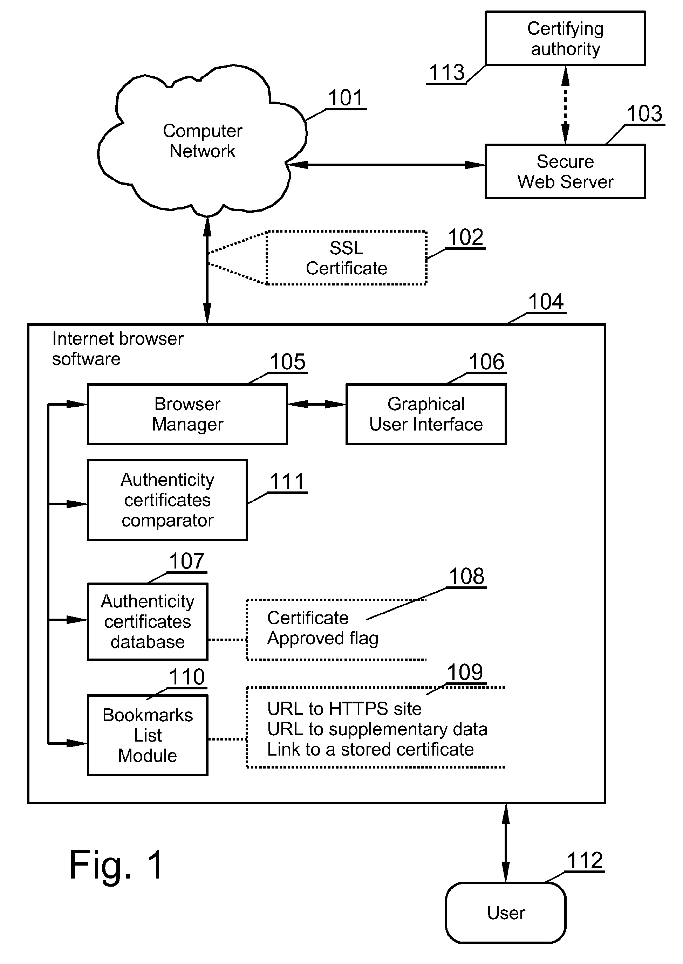

Fig. 1 is a block diagram generally illustrating a system for performing secure data transactions over a computer network 101, such as the Internet. The system comprises, besides the computer network 101, are a secure web server 103, operating within a specified domain name, to which an authenticity certificate 102 has been assigned by a certifying authority 113, a computer network 101 and a client software i.e. Internet browser software 104.

The secure web server 103 supports encrypted SSL connections using the authenticity certificate assigned to it. As known from the prior art, the authenticity certificate 102 is an electronic document, digitally signed. The document includes the entity's public key and information that confirms the identity of the entity and the association of the entity with that particular domain name.

A user 112, uses the Internet browsing software 104, running on user's computer system (for example a personal computer, a personal digital assistant, a telephone, a digital television receiver or a similar device), to access various services or network sites available via the computer network 101. The user can, for example, navigate to a network website of a user's bank account or an Internet auctions service. When the Internet browsing software 104, initiates a session with the secure server's website, the two computers, namely the secure web server 103 and the client i.e. user's 112 computer system, executing the Internet browser software 104, negotiate an SSL connection and the secure web server 103, transmits the authenticity certificate 102, to the Internet browsing software 104. Once the Internet browsing software 104 validates the authenticity certificate 102, a secure session is established between these two computers. It is also understood that users acceptance may be required in order to validate the authenticity certificate 102.

The web page, received from the secure web server 103, is displayed, on the display screen (not shown) of the user's 112 computer system, using a graphical user interface 106 component of the Internet browsing software 104. A browser manager 105 controls operation of the Internet browsing software 104 according to user's 112 commands. The browser manager 105 functional component supports the retrieval of content, for example an HTML document, from the computer network 101, such as the Internet, using for example a commonly used TCP/IP protocol, and subsequent viewing of the received content. The Internet browsing software 104 may be implemented as functionality or modules of program code in a computer operating system, or it may be implemented as a standalone application, or as a combination of the two methods.

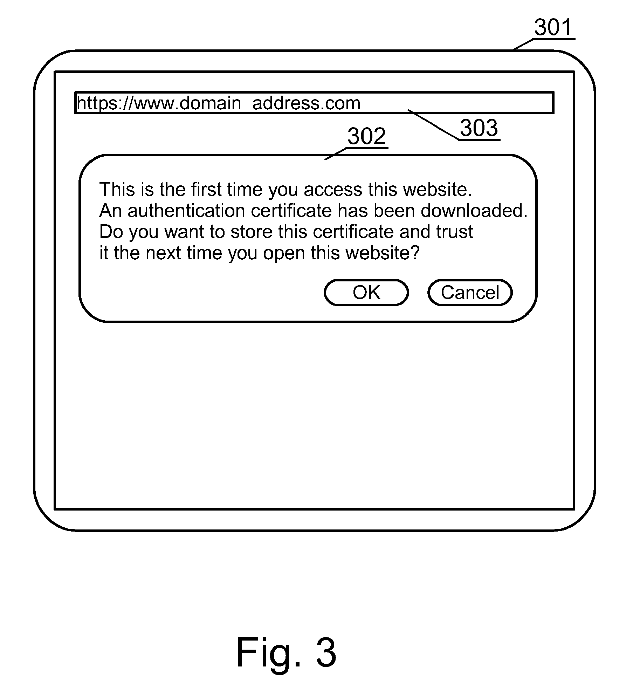

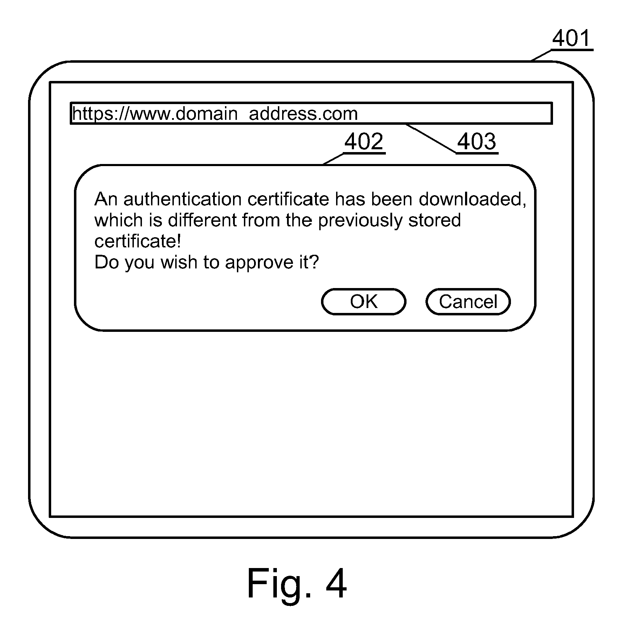

The graphical user interface 106 is also configured to create a visual display of the warning messages shown in Fig. 3 and Fig. 4. The graphical user interface 106, shall instruct the user's computer system to display the graphical user interface of the Internet browsing software 104.

An authenticity certificates comparator 111 is a component that allows to obviate the need for the user to check authenticity certificates every time the user wishes to securely access a network site or more general a network resource requiring an encrypted connection. The authenticity certificates comparator 111 checks whether an authenticity certificates database 107 comprises a record describing the authenticity certificate related to the network resource being accessed, which requested a secure connection and sent the authenticity certificate 102 in order to establish it. When the authenticity certificates comparator 111 detects a match, it outputs a confirmation signal to the browser manager 105. The authenticity certificates comparator 111 eases and speeds up the verification of authenticity certificates, which may be time consuming and difficult for the users of the Internet browsing software. Integration with the authenticity certificates database 107 gives further control to the user and limits the possibility of an unintended mistake that is quite likely to happen in conventional Internet browsing software systems.

The authenticity certificates database 107, managed by the Internet browser software 104, may receive and verify certificates received by the browser manager 105, such as the authenticity certificate 102. The authenticity certificates database 107 may contain downloaded certificates together with information, for example a 'certificate approved' flag 108, whether the user 112, has trusted this certificate. The authenticity certificates database 107 is also configured to make information, about the authenticity certificates, available to other components of the Internet browsing software 104, for example to the browser manager 105, to the authenticity certificates comparator 111 for comparing a current authenticity certificate received from the secure web server 103 with a stored authenticity certificate, to verify a bookmark's URL defined by the bookmarks list module 110 or to the graphical user interface 106 in order to display a given authenticity certificate's data. Typically, the authenticity certificates database 107 is stored locally on the user's computer system, which executes the Internet browsing software 104. However, optionally the database may be located on a different computer system accessible via a network, including an Internet server.

Another functional module is a bookmarks list module 110, which allows for integration of the authenticity certificates database 107 with bookmarks to Internet websites. Such bookmarks are typically stored by the users 112 of the Internet browsing software 104, in order to quickly access their favourite websites without the need of finding these websites via different Internet search engines. The integration may be implemented by an introduction of special bookmarks created when an HTTPS website is bookmarked. Such an extended bookmark can comprise, in addition to a single link and a name as known from the prior art, an association with a downloaded authenticity certificate and an optional URL link to a website providing information on authenticity certificate's data 109. Usually there are provided, for example within Internet bank's portals, explanations as to what should be the correct content of an authenticity certificate for a given domain and the issuing party's data. Such information may for example be also a thumbprint of the authenticity certificate. Such enhanced bookmarks may be stored either locally, on the user's computer system, which executes the Internet browsing software 104, or on a different computer system including an Internet web server.

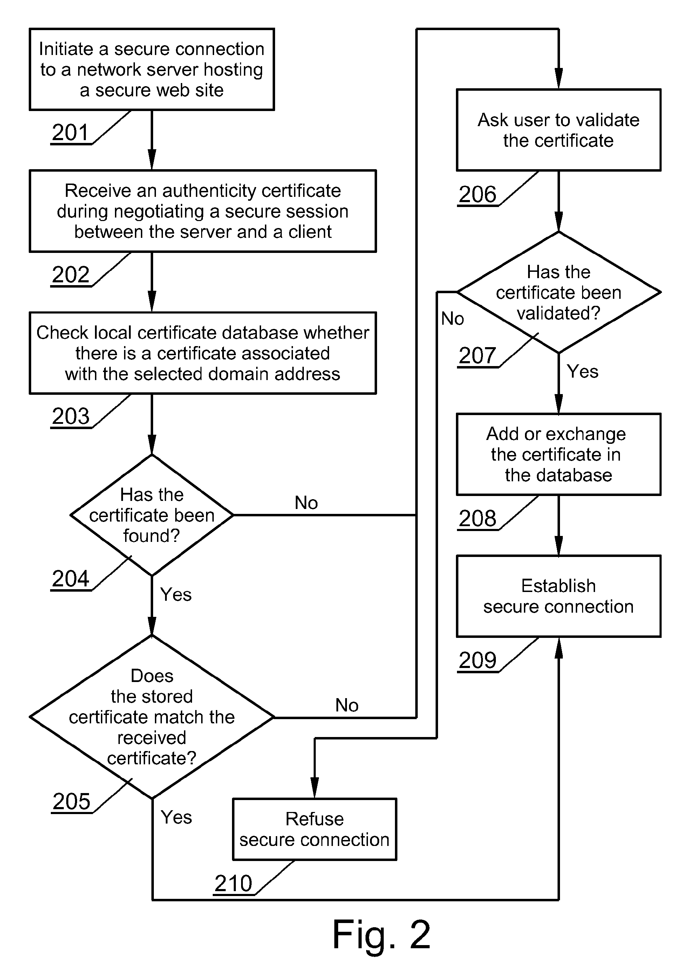

Fig. 2 is a flow chart representing method steps of one embodiment of the present invention. The whole depicted procedure may be implemented on a computer, on which resides and executes the Internet browsing software for accessing locations on a computer network, such as the Internet. The Internet browsing software will be typically stored on a computer readable medium accessible by the computer.

The procedure begins in step 201, where the user's Internet browsing software104, initiates a secure connection to the secure web server 103, hosting a selected secure web site.

Next, in step 202, the Internet browsing software 104, receives an authenticity certificate during negotiating a secure connection. The received authenticity certificate is associated with the domain name the Internet browsing software is accessing. The received authenticity certificate is temporarily stored in a memory of the receiving system. It shall be noted that storing an authenticity certificate may be limited to storing only selected items of the authenticity certificate or storing a processed result of the authenticity certificate such as a checksum. The whole authenticity certificate may also be stored. Therefore the term authenticity certificate used in claims of the present invention shall mean the certificate itself, any selected part or parts of it or data, obtained based on the authenticity certificate's content, uniquely identifying the particular authenticity certificate.

In any connection except the first connection, in steps 203 and 204, the authenticity certificate received in step 202 and treated as a current authenticity certificate is evaluated to determine its earlier presence in the authenticity certificates database 107. The authenticity certificate's domain name is checked and compared with domain names that may be stored in the authenticity certificates database 107. Using the domain name, a previously stored authenticity certificate may be retrieved from the authenticity certificates database 107. If the authenticity certificate, for this domain name, is already present in the authenticity certificates database 107, the procedure moves to step 205. Otherwise, when the authenticity certificate of this domain name has not been previously stored in the authenticity certificates database 107, which means that the present connection is the first connection to this domain name, the procedure goes to step 206.

In step 205 it is verified, whether the current authenticity certificate of a given domain name, stored in the authenticity certificates database 107, matches a stored authenticity certificate. When there is a match the procedure goes to step 209, where the secure connection is established since the authenticity certificate is the same as the stored authenticity certificate previously accepted by the user 112. Otherwise, when the authenticity certificates are different, the procedure moves to step 206.

In step 206, the user is asked by the Internet browsing software to validate the received authenticity certificate. To assist the user, the authenticity certificate may first be automatically evaluated in one or more different ways. For example, the signing of the authenticity certificate may be confirmed with a local root certificate for a particular certifying authority 113, expiration date of the authenticity certificate may be checked, comparing site information in the authenticity certificate to the current session, determining whether the authenticity certificate has been revoked, or the like. Evaluating the authenticity certificate comprises retrieving descriptive information from the authenticity certificate. Nevertheless it is the user who has to approve the authenticity certificate in step 206. For example the user may open another Internet browser software window and check whether the received authenticity certificate content matches the information provided by the secure web site maintaining entity, often available on an open, i.e. not secure connection. At this point the user 112 is expected to respond to questions of dialog windows described later with reference to Fig. 3 and Fig. 4.

When the user does not validate the received authenticity certificate, at point 207 of the procedure, the secure connection is refused, by the Internet browsing software 104, in step 210.

In another embodiment, at user option, the authenticity certificate may be accepted by the Internet browsing software and the secure session may be established but the Internet browser software 104 may prohibit sending of any data, for example data entered by the user in graphical user interface fields or forms.

In yet another embodiment, at user option, the authenticity certificate may be accepted by the Internet browsing software and the secure session may be established but sending user's data to the network site is prohibited until the user has identified the authenticity certificate as trustworthy. Such identification may be done with the use of the 'certificate approved' flag 108.

In case when the received authenticity certificate has been validated by the user in step 207, the procedure moves to step 208. In step 208 the received authenticity certificate is stored or exchanged in the certificates database 107, depending whether the certificate is a new one. The authenticity certificate, temporarily stored in the memory in step 202, is now permanently stored i.e. stored in the certificates database 107, which is stored in a non-volatile memory. This means that the permanently stored authenticity certificate will be later available to the Internet browsing software 104 when it has been restarted or when the whole user's computer system has been restarted. This does not limit, in any way, the user's 112 ability to delete or replace such a permanently stored authenticity certificate from the authenticity certificates database 107.

Typically a domain name and the authenticity certificate will be stored in the authenticity certificates database 107. Nevertheless the domain name is separated here optionally for the purpose of faster identification of the data. The domain name may be extracted from the authenticity certificate itself, though it will be more time consuming, especially when there are many stored authenticity certificates in the authenticity certificates database 107. It is however advised, according to the present invention, to keep the domain name separately in the authenticity certificates database 107, in order to secure the user from the man-in-the-middle type of electronic theft attack.

The last step 209 of the procedure, according to the present invention, is to establish a secure connection using the authenticity certificate 102, received in step 202 of the procedure.

In another embodiment, in order to secure user's decisions and information on validated authenticity certificates, the method may require to identify a particular user 112. This may be achieved by a separate login or by using the user name and login that has been input when the user logged to the operating system of the user's 112 computer system. Moreover the authenticity certificates database 107 may store information assigning a particular user to a stored authenticity certificate.

Fig. 3 presents an exemplary GUI message displayed upon reception of an authenticity certificate. Such a warning message may be displayed on a screen 301 by the Internet browsing software 104 when an authenticity certificate has been received for the first time or has not been previously stored in the authenticity certificates database 107. In this example the server of the domain domain_address.com has requested an SSL connection and transmitted an SSL authenticity certificate to the user's Internet browser software. Before accepting the connection, the Internet browsing software may, according to the present invention, ask the user to define whether this web server is trustworthy. This may be executed by answering to a dialog box 302 presented in Fig. 3. When the user makes a decision, it is processed as described above with reference to Fig. 2.

Fig. 4 shows an exemplary graphical user interface (GUI) message, which may be displayed upon reception of an authenticity certificate that has changed since it was received for the last time. Such warning message may be displayed on a screen 401 by the Internet browsing software when an authenticity certificate is received, which is different than a stored certificate for this domain name that has been kept in the authenticity certificates database 107. In this example the network server of the domain domain_address.com 403 has requested an SSL connection and transmitted an SSL authenticity certificate to the user's Internet browser software 104. Before accepting the connection, the Internet browsing software may, according to the present invention, ask the user to define whether this web server is trustworthy after the authenticity certificate has been changed. This may be executed by answering to a dialog box 402 presented in Fig. 4. When the user makes a decision, it is processed as described above with reference to Fig. 2.

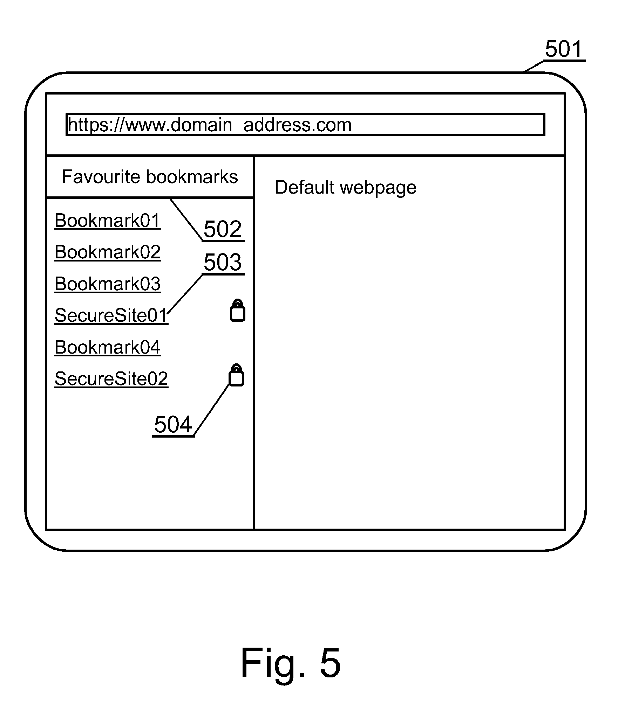

Fig. 5 presents an exemplary graphical user interface screen, of the Internet browser software 104, listing bookmarks with associated authenticity certificates. The displayed interface 501 presents, on its left-hand side, a list of user's favourite bookmarks 502. Such list comprises bookmarks from Bookmark01 to Bookmark04, that are typical in the prior art, but also lists two bookmarks according to the present invention. Namely the new ones are SecureSite01 and SecureSite02 bookmarks that have an associated authenticity certificate stored locally (i.e. accessible from a location other than the domain server the authenticity certificate is assigned to). In one embodiment of the present invention, the associated authenticity certificates may for example be stored locally in the authenticity certificates database 107. An authenticity certificate stored in the authenticity certificates database is called an associated authenticity certificated when a bookmark refers to it.

The fact that a given bookmark is a trusted bookmark with a known authenticity certificate is indicated by the padlock symbol 504. In another embodiment, the padlock symbol 504 may have various colours depending on whether the user 112 has already validated the associated authenticity certificate. For example a bookmark to a secure site with an associated authenticity certificate, which has a locally stored, that has not been validated by the user yet, could be identified with a red padlock symbol 504. When the user has validated the authenticity certificate for that same bookmark to a secure site, the padlock symbol 504 colour could be changed to green.

The present invention, therefore, is well adapted to carry out the objects mentioned.

The present invention allows for improved security in terms of verifying authenticity certificates by the user and assures that a given authenticity certificate, downloaded from a network server, corresponds to its identification data provided by a particular Internet server maintaining authority, for example via an Internet bank website.

While the present invention has been depicted, described, and is defined by reference to particular preferred embodiments of the invention, such references in the foregoing specification do not imply a limitation on the invention. It will, however, be evident that various modifications and changes may be made thereto without departing from the broader scope of the invention. The presented preferred embodiments of the invention are exemplary only, and are not exhaustive of the scope of the invention.

## Claims

1. A method for managing access to network content, the method comprising the steps of
during negotiating a first connection with a network server, hosting the network content, obtaining an authenticity certificate from the network server;
temporarily storing the authenticity certificate in a computer system's memory; validating the authenticity certificate;
**characterised in that** the method further comprises the steps of
permanently storing the authenticity certificate in a computer system's non-volatile memory;
during negotiating another connection, at a later time, with the network server, hosting the network content, obtaining a current authenticity certificate from the network server hosting the network content;
comparing the authenticity certificate permanently stored in the computer system's non-volatile memory, with the current authenticity certificate; and outputting a result of the comparison.

2. The method according to claim 1, **characterised in that** the step of permanently storing of the authenticity certificate is conditional upon user's acceptance.

3. The method according to claim 2, **characterised in that** unless the user has accepted the authenticity certificate, entering user data into data entry components on a network site received as the network content or sending user's data to the network server is prohibited.

4. The method according to claim 1, **characterised in that**, at user's option, the authenticity certificate, permanently stored in the computer system's non-volatile memory is replaced with the current authenticity certificate when the result of the comparison identifies a difference between the stored authenticity certificate and the current authenticity certificate.

5. The method according to claim 4, **characterised in that** the authenticity certificate permanently stored in the computer system's non-volatile memory or the current authenticity certificate is associated with a network site's bookmark.

6. The method according to claim 5, **characterised in that** when a browsing software displays a bookmark with the authenticity certificate associated with the network site, the bookmark's appearance depends on whether the authenticity certificate has been validated.

7. The method according to claim 5, **characterised in that** a bookmark data comprises a link to selected network site and the authenticity certificate associated with the network site.

8. The method according to claim 7, **characterised in that** a bookmark data further comprises a link to a network site where the owner of the authenticity certificate provides information on how to identify the current authenticity certificate obtained from the network server hosting the network content.

9. The method according to claim 1, **characterised in that** when the result of comparison identifies a difference between the authenticity certificate permanently stored in the computer system's non-volatile memory and the current authenticity certificate, access to the network content is prohibited until the user has identified the current authenticity certificate as trustworthy.

10. The method according to claim 1, **characterised in that** when the result of comparison identifies a difference between the authenticity certificate permanently stored in the computer system's non-volatile memory and the current authenticity certificate, entering user data into data entry components on a network site, received as the network content, is prohibited until the user has identified the current authenticity certificate as trustworthy.

11. The method according to claim 1, **characterised in that** when the result of comparison identifies a difference between the authenticity certificate permanently stored in the computer system's non-volatile memory and the current authenticity certificate, sending user's data to a network site, received as the network content, is prohibited until the user has identified the current authenticity certificate as trustworthy.

12. The method according to claim 4, **characterised in that** the authenticity certificate permanently stored in the computer system's non-volatile memory and the current authenticity certificate are SSL (Secure Sockets Layer) certificates.

13. A computer program comprising program code means for performing all the steps of a method as claimed in any of claims 1 to 12 when said program is run on a computer.

14. A computer readable medium having computer-executable instructions performing all the steps of the computer-implemented method according to any of claims 1 to 12.

15. A system for managing access to network content with a certificate authority (113) capable to issue authenticity certificates (102) associated with network sites to be accessed by a user, operating a computer system provided with an Internet browser software (104) stored in a computer system memory **characterized in that** the Internet browser software (104) contains a browser manager (105), a certificates database (107) for storing the authenticity certificates (102) associated with the network sites and an authenticity certificates comparator (111) for comparing a current authenticity certificate associated with a network site being accessed with a permanently stored authenticity certificate associated with the network site, and that the authenticity certificate comparator (111) is capable for outputting a result of comparison of the current authenticity certificate and the permanently stored authenticity certificate, and that the browser manager (105) is configured to allow the user to access the network site basing on the result of comparison.
